# EUROPÄISCHE PATENTANMELDUNG

(11) **EP 3 973 779 A1**
(43) Veröffentlichungstag der Anmeldung: **30.03.2022**
(21) Anmeldenummer: 20198292.3
(22) Anmeldetag: 25.09.2020
(51) Int. Cl.: A21C 3/04, A21C 1/14, A21C 3/10, A21C 5/00

(54) **AUSTRAGSVORRICHTUNG FÜR KOMPAKTE NAHRUNGSMITTELMASSEN AUFWEISEND EINE VORRICHTUNG ZUR GRÖSSENKONTROLLE**

(71) Anmelder: DIOSNA Dierks & Söhne GmbH, 49086 Osnabrück (DE)
(72) Erfinder: BENSMANN, Stefan, 49078 Osnabrück (DE)
(74) Vertreter: Lenzing Gerber Stute

(57) **Zusammenfassung**

Die Erfindung betrifft eine Verarbeitungsanlange für eine kompakte Nahrungsmittelmasse aufweisend eine Vorrichtung zur Größenkontrolle (6) von aus einem Knetbottich (3) stückweise ausgetragenen zusammenhängenden Nahrungsmittelmassen, wobei die Vorrichtung zur Größenkontrolle (6)
- einen raumfesten Teil aufweist, der parallel zueinander ausgerichtete messerscharfe Trennstriche (9) aufweist, die sich mit ihren Längsachsen (10) in eine erste Richtung (100) erstrecken und
- einen zwischen einer oberen und einer unteren Position verfahrbaren Stempel (11), der auf die Trennstriche (9) zustellbar ist und eine Grundplatte (12) aufweist, die dazu ausgebildet ist, auf den Trennstrichen (9) liegende Stücke von Nahrungsmittelmassen gegen die Trennstriche (9) zu drücken und zu zerkleinern.

## Beschreibung

Die vorliegende Erfindung betrifft eine Verarbeitungsanlange für eine kompakte Nahrungsmittelmasse mit den Merkmalen des Oberbegriffs des Anspruchs 1 und einen Hebekipper mit einer solchen Austragsvorrichtung sowie ein Verfahren zum Austragen einer kompakten Nahrungsmittelmasse aus einem in einem Hebekipper angeordneten Knetbottich mit den Merkmalen des Oberbegriffs des Anspruchs 11.

Produkte wie Kekse, Lebkuchen, und Riegel, insbesondere Proteinriegel, Schoko-, Müsli, Frucht- und Cerealienriegel und dergleichen weisen eine hochviskose Nahrungsmittelmasse auf, die bei der Verarbeitung besondere Anforderungen mit sich bringt.

Misch- und Knetmaschinen für solche hochviskosen Nahrungsmittelmassen bestehen vorwiegend aus einem fahrbaren Bottich unterschiedlicher Größe für Massen von 120 bis 1000 Kg, in den jeweils ein motorisch antreibbares Misch- und Knetwerkzeug zur Durchführung des Misch- und Knetvorganges hineinragt. Nach Beendigung des Knetvorganges wird das Werkzeug ausgefahren und der Bottich zu einer Verarbeitungsanlage gefahren. Mit Hilfe eines Hebekippers wird der Bottich von einer Hebebühne des Hebekippers erfasst, auf die der Größe des Hebekippers entsprechenden Höhe gebracht und um mehr als 90° gekippt, so dass das die im Bottich befindliche Masse in die darunter angeordnete Eingangsstation einer Bearbeitungsvorrichtung fällt, welche beispielsweise als ein Trichter ausgebildet sein kann. Die Bearbeitungsvorrichtung umfasst beispielsweise das Walzen der Masse zum lagenweisen Auftragen auf ein Fließband, wie das bei mehrlagigen Produkten, insbesondere Riegeln oder Keksen gewünscht ist.

Hochviskose Nahrungsmittelmassen sind nicht fließfähig. Beim Knetvorgang bildet sich ein großer Nahrungsmittelmassen-Block aus. Dieser wird herkömmlicherweise bei dem Austrag aus dem Hebekipper durch Bedienpersonal manuell oder automatisch zerkleinert, um einzelne kleinere Teigstücke für die Weiterbearbeitung in der Bearbeitungsvorrichtung bereitzustellen. Aus der Offenlegungsschrift WO 2020/094802 A1 ist es zudem bekannt, den Austrag mit Hilfe einer Austragsvorrichtung vollautomatisch vorzunehmen. Dabei besteht die Gefahr, dass die Größe der ausgetragenen Stücke größer als das geforderte Höchstmaß ist. Zu große Stücke können die Öffnung des Trichters der Bearbeitungsvorrichtung teilweise oder ganz verstopfen.

Damit die Anlage zuverlässig arbeiten kann, muss beim Austrag der Nahrungsmittelmasse aus dem Knetbottich sichergestellt werden, dass eine Maximalgröße der Stücke nicht überschritten wird. Dies ist bisher nicht automatisiert möglich.

Es ist Aufgabe der vorliegenden Erfindung eine Verarbeitungsanlange für eine kompakte Nahrungsmittelmasse anzugeben, welche in einem vollautomatischen Betrieb das Einhalten von maximalen Stückgrößen gewährleistet.

Diese Aufgabe wird von einer Verarbeitungsanlange für eine kompakte Nahrungsmittelmasse mit den Merkmalen des Anspruchs 1 und einem Verfahren zum Austragen einer kompakten Nahrungsmittelmasse aus einem in einem Hebekipper angeordneten Knetbottich mit den Merkmalen des Anspruchs 11 gelöst.

Demnach ist eine Verarbeitungsanlange für eine kompakte Nahrungsmittelmasse aufweisend eine Vorrichtung zur Größenkontrolle von aus einem Knetbottich stückweise ausgetragenen zusammenhängenden Nahrungsmittelmassen, vorgesehen, wobei die Vorrichtung zur Größenkontrolle
- einen raumfesten Teil aufweist, der parallel zueinander ausgerichtete messerscharfe Trennstriche aufweist, die sich mit ihren Längsachsen in eine erste Richtung erstrecken und
- einen zwischen einer oberen und einer unteren Position verfahrbaren Stempel, der auf die Trennstriche zustellbar ist und eine Grundplatte aufweist, die dazu ausgebildet ist, auf den Trennstrichen liegende Stücke von Nahrungsmittelmassen gegen die Trennstriche zu drücken und zu zerkleinern.

Stücke von Nahrungsmittelmassen, die durch die Trennstriche fallen oder von diesen geschnitten bzw. getrennt werden und danach durch die Trennstriche fallen haben eine Größe, die kleiner ist als die Maximalgröße. Sollten Stücke zu groß sein und auf den Trennstrichen liegen bleiben, kommt der Stempel zum Einsatz, der die Stücke auf die Trennstriche drückt, sodass auch diese Stücke in kleinere Stücke geschnitten werden und durch die Trennstriche fallen. Die Vorrichtung zur Größenkontrolle weist eine mechanische Kontrolle der Stückgröße auf und ist besonders einfach und robust ausgebildet.

Die Verarbeitungsanlange weist bevorzugt einen Hebekipper mit Austragsvorrichtung auf.

Vorzugsweise weist der Stempel an der Unterseite der Grundplatte Messer auf, die sich mit ihren Längsachsen entlang einer zweiten Richtung erstrecken, die einen Winkel zwischen 80° und 110° zur ersten Richtung einnimmt. Diese Messer können große und parallel zu den Trennstrichen erstreckende Stücke zerkleinern. Um das Zerkleinern effektiv auszugestalten, sind die Messer des verfahrbaren Stempels hintereinander und zueinander beabstandet und auf einer gemeinsamen Achse liegend angeordnet.

Um Sicherzustellen, dass alle Stücke durch die Trennstriche fallen, weist der raumfeste Teil der Vorrichtung zur Größenkontrolle eine schiefe Ebene auf, die an die Trennstriche angrenzt und eine Zufuhr der stückweise zusammenhängenden Nahrungsmittelmassen entlang der ersten Richtung auf die Trennstriche ausbildet.

Um den Schneideffekt weiter zu erhöhen, ist der verfahrbare Stempel vorzugsweise vertikal auf die Trennstriche zustellbar, wobei die Messer des Stempels derart angeordnet sind, dass in der untersten Position des Stempels jeweils ein Messer zwischen zwei beabstandete Trennstriche ragt.

Es ist vorteilhaft, wenn die Grundplatte des verfahrbaren Stempels verkippbar an einem Arm gehalten ist, wobei die Kippachse senkrecht zur ersten Richtung orientiert ist. Der Arm ist bevorzugt ein Pneumatikzylinder.

Der kürzeste Abstand zwischen den Trennstrichen definiert bevorzugt die für die Verarbeitung maximal zulässige Größe der stückweise zusammenhängenden Nahrungsmittelmassen.

Vorzugsweise weist die Vorrichtung zur Größenkontrolle eine Sensoreinheit mit wenigstens einem Sensor auf, der zur Detektion von auf den Trennstrichen liegenden Stücken ausgebildet ist.

Bevorzugt weist die Vorrichtung zur Größenkontrolle in vertikaler Richtung unterhalb der Trennstriche einen Trichter zur Zuführung der stückweise zusammenhängenden Nahrungsmittelmasse in einen Bearbeitungsabschnitt auf, wobei die Vorrichtung zur Größenkontrolle eine Sensoreinheit mit wenigstens einem Sensor umfasst, der zur Detektion von den Trichter blockierenden Stücken ausgebildet ist.

Die Verarbeitungsanlange weist besonders bevorzugt eine Austragsvorrichtung zum automatisierten, portionsweisen Austrag einer kompakten Nahrungsmittelmasse aus einem in einem Hebekipper angeordneten Knetbottich auf, die wenigstens zwei Schneidwerkzeuge aufweist, die wiederum jeweils wenigstens zwei Schneidkanten aufweisen, um die kompakte Nahrungsmittelmasse zu durchtrennen oder zu zerschneiden. Die Austragsvorrichtung ist der Vorrichtung zur Größenkontrolle vorgeschaltet.

Weiterhin ist ein Verfahren zum Austragen einer kompakten Nahrungsmittelmasse aus einem in einem Hebekipper angeordneten Knetbottich mit folgenden Verfahrensschritten vorgesehen:
- Verkippen des Knetbottichs um eine Kippachse,
- Einbringen wenigstens zweier Schneidwerkzeuge einer an dem Hebekipper angeordneten Austragsvorrichtung in den Knetbottich,
- Bewegen der Schneidwerkzeuge relativ zu einer im Knetbottich befindlichen Nahrungsmittelmasse, derart, dass die Schneidwerkzeuge die Nahrungsmittelmasse in kleinere Stücke schneiden,
- Vergrößerung des Kippwinkels des Knetbottichs, derart, dass die kleinen Stücke aus dem Knetbottich ausgetragen werden und die noch vorhandenen großen Stücke zurückgehalten werden, wobei die ausgetragenen Stücke mittelbar oder unmittelbar auf oder durch zueinander beanstandete und parallel angeordnete Trennstriche einer Vorrichtung zur Größenkontrolle fallen, und folgende Verfahrensschritte vorgesehen sind:
- Detektieren mit Hilfe wenigstens eines Sensors, dass Stücke auf den Trennstrichen liegen,
- Bewegen eines Stempels der Vorrichtung zur Größenkontrolle von oben auf die Trennstriche zu, derart, dass die auf den Trennstrichen liegenden Stücke mittels einer Grundplatte des Stempels gegen die Trennstriche gedrückt und zerkleinert werden.

Es kann vorgesehen sein, dass die Stücke aus dem Knetbottich unmittelbar auf die Trennstriche fallen, oder es kann eine schiefe Ebene oder ein Förderband oder dergleichen verwendet werden, um die Vorrichtung zur Größenkontrolle zu beschicken.

Die Vorrichtung zur Größenkontrolle ist, wie oben genannt, ausgebildet.

Die Vorrichtung zur Größenkontrolle weist bevorzugt unterhalb der Trennstriche einen Trichter auf, der die Stücke einem Bearbeitungsabschnitt zuführt, wobei dann vorzugweise folgender Verfahrensschritt vorgesehen ist:
- Detektieren mit Hilfe wenigstens eines Sensors, dass der Trichter mit Stücken verstopft ist und Stoppen des Austrags der kompakten Nahrungsmittelmasse aus dem im Hebekipper angeordneten Knetbottich.

Die Austragsvorrichtung wird bei Verstopften des Trichters angehalten und die Stücke können manuell aus dem Trichter entnommen werden, damit die Anlage danach wieder problemlos in Betrieb gehen kann.

Wie bereits oben dargelegt, ist es vorteilhaft, wenn die Grundplatte des verfahrbaren Stempels verkippbar an einer Zylinderstange des Stempels gehalten ist, wobei die Kippachse senkrecht zur Verfahrrichtung des Stempels und zu den Längsachsen der Trennstriche orientiert ist.

Eine bevorzugte Ausführungsform der Erfindung wird nachfolgend anhand der Zeichnungen näher erläutert. Gleichartige oder gleichwirkende Bauteile werden in den Figuren mit denselben Bezugszeichen bezeichnet. Es zeigen:
- Figur 1:: eine schematische Darstellung eines Hebekippers mit Austragsvorrichtung in unterschiedlichen Positionen aus dem Stand der Technik,
- Figur 2:: eine Seitenansicht der Austragsvorrichtung der Figur 1 mit daneben platzierter Vorrichtung zur Größenkontrolle,
- Figur 3:: eine Draufsicht auf die Vorrichtung zur Größenkontrolle aus Figur 2,
- Figur 4:: eine Ansicht in das Innere der Vorrichtung zur Größenkontrolle, sowie
- Figur 5:: eine Seitenansicht der Vorrichtung zur Größenkontrolle.

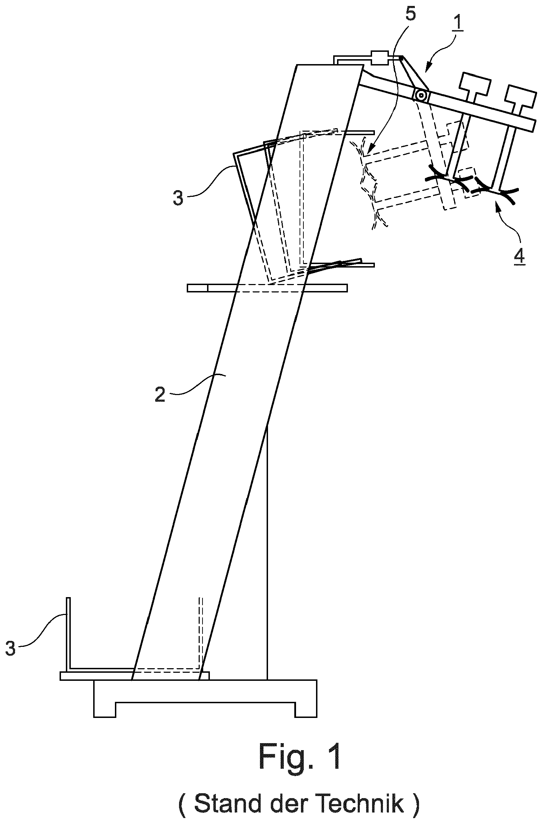

In der Figur 1 ist eine automatische Austragsvorrichtung 1 dargestellt, die an einem Hebekipper 2 einer Teigverarbeitungsanlage montiert ist. Im Folgenden wird die Verarbeitung eines hochviskosen Nahrungsmittelteigs beschrieben.

Die Austragsvorrichtung ist aber auch zur Verarbeitung von hochviskosen Riegel-, Stangen- oder Tafelmassen geeignet, die analog zur Teigverarbeitung erfolgt.

Dem Hebekipper 2 ist im Produktionsfluss eine nicht dargestellte Teigmisch-und Knetmaschine vorgeschaltet. Diese Teigmisch-und Knetmaschine umfasst einen Bottich, in dem der Teig durch ein motorisch angetriebenes Misch- und Knetwerkzeug geformt wird. Nach Beendigung des Knetvorganges wird der Bottich zu dem Hebekipper 2 gefahren. Figur 1 stellt den Hebekippvorgang des Hebekippers dar. Als erstes wird ein Bottich 3 in dem Hebekipper 2 angehoben und dann gekippt. Eine Austragsvorrichtung 1 mit rotierenden Schneidwerkzeugen wird während des Kippvorgangs in den Bottich 3 eingeschwenkt, so dass die Schneidwerkzeuge 4 auf den im Bottich 3 befindlichen Teig zugestellt werden. Durch eine relative Bewegung des Teiges zu den Messerköpfen 5 der Schneidwerkzeuge, wird der Teig an diesen vorbeigeführt und mittels der Schnittkanten abgeschnitten, abgeschält und/oder abgetrennt. Der Teigblock wird dadurch stetig verkleinert. Die abgetrennte Teigmasse verbleibt zuerst in dem Bottich 3 und fällt, sobald der Kippwinkel groß genug ist auf eine nicht dargestellte unterhalb des Bottichs angeordnete Fördereinheit, die die Teigmasse zu einer Vorrichtung zur Größenkontrolle transportiert.

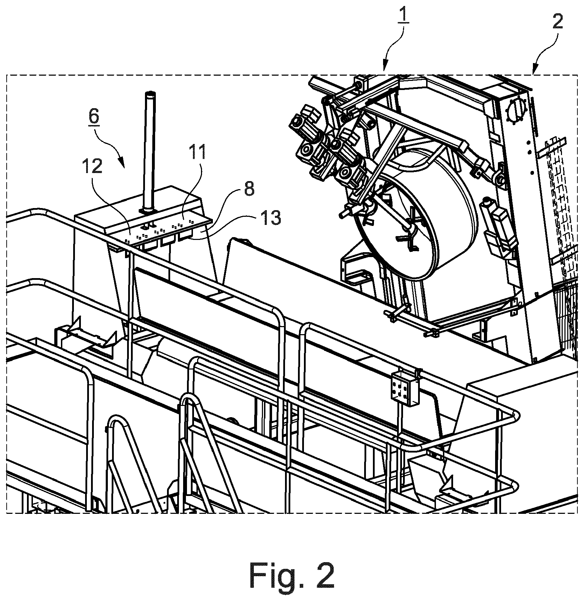

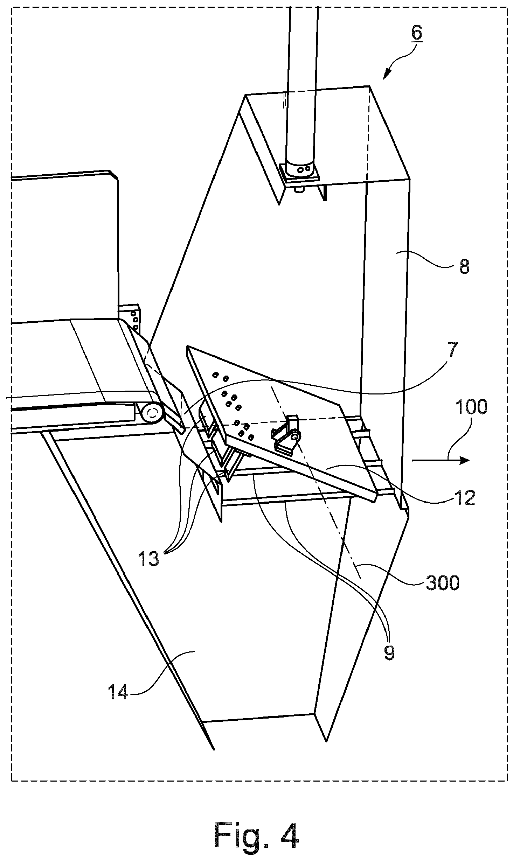

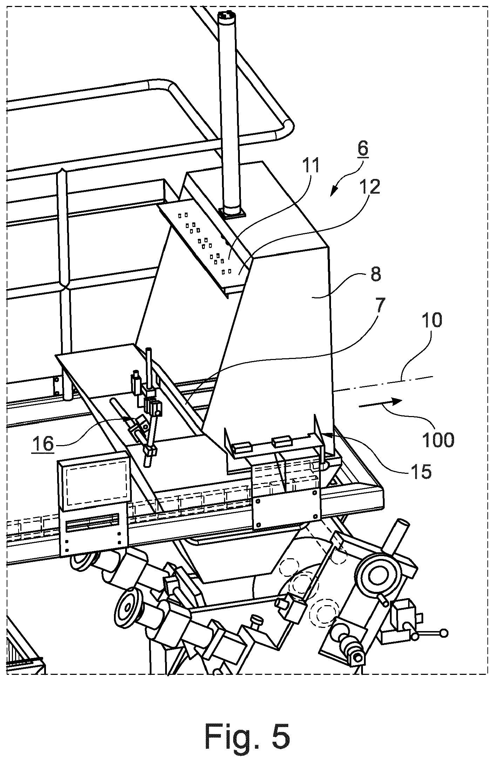

Die Figuren 2 bis 5 zeigen eine Vorrichtung zur Größenkontrolle 6 der aus der Austragsvorrichtung 1 ausgetragenen Teigmassen. Diese Vorrichtung 6 ist dem Hebekipper 2 und der Austragsvorrichtung 1 bei der Verarbeitung des Teigs nachgeschaltet. Die Vorrichtung zur Größenkontrolle 6 weist eine, in den Figuren 4 und 5 dargestellte, schiefe Ebene 7 auf, die in einer ersten Richtung 100 geneigt ist und auf die die aus dem Knetbottich ausgetragenen Teigmassen fallen. An die schiefe Ebene 7 grenzt ein von Außenseiten 8 umschlossener Raum, in dem vier Trennstriche 9 angeordnet sind. Die Trennstriche 9 sind langgezogene Metallbleche, die im vorderen Bereich (der schiefen Ebene anschließend) als Messerklingen, deren scharfe Klinge in vertikaler Richtung oben liegt und die im hinteren Bereich mit einer stumpfen Auflagefläche ausgebildet sind. Die Trennstriche 9 sind mit ihren Längsachsen 10 entlang der ersten Richtung 100 orientiert und weisen zueinander und zu den Außenseiten der Vorrichtung 8 einen gleichmäßigen Abstand auf. Wenn die Teigmasse klein genug ist, kann sie den Raum zwischen den Trennstrichen 9 passieren. Größere Stücke fallen auf die Trennstriche 9 und werden von den Trennstrichen 9 zerkleinert bzw. durchtrennt oder bleiben auf den Trennstrichen 9 liegen.

Die Vorrichtung zur Größenkontrolle 6 weist zudem einen verfahrbaren Stempel 11 mit einer Grundplatte 12 auf, wobei die Größe der Grundplatte 12 der Größe des umschlossenen Raums entspricht. Der Stempel 11 ist auf die Trennstriche 9 in vertikaler Richtung zustellbar, so dass auf den Trennstrich 9 liegende Stücke mittels des Stempels 11 gegen die Trennstriche 9 gedrückt werden können, was dazu führt, dass die Stücke von den Trennstrichen 9 zerkleinert bzw. durchtrennt werden und nach unten durchfallen. An der Unterseite der Grundplatte des Stempels 12 sind Messer 13 angeordnet, die sich senkrecht von der Unterseite her erstrecken. Die Messer 13 liegen auf einer gemeinsamen Achse 200 hintereinander, wobei die Achse 200 senkrecht zur ersten Richtung 100 orientiert ist. Die Messer 13 sind identisch ausgebildet. In dem dargestellten Beispiel sind vier Messer vorhanden. Der Stempel 11 bewegt sich in vertikaler Richtung zwischen einer obersten Position und einer untersten Position. In der obersten Position ist der Raum oberhalb der Trennstriche 9 für die ausgetragenen Nahrungsmittelstücke freigegeben. In der untersten Position liegt die Grundplatte 12 auf den Trennstrichen 9, insbesondere im hinteren, stumpfen Bereich auf. Die Messer des Stempels 13 ragen in der untersten Position jeweils durch zwei benachbarte Trennstriche 9 bzw. zwischen einen Trennstrich 9 und eine Außenwand der Vorrichtung. Die Grundplatte 12 ist in einem Kippgelenk verkippbar an einer Zylinderstange gehalten. Die Kippachse 300 liegt senkrecht zur ersten Richtung 100 und parallel zur Achse 200. Trifft die Grundplatte 12 auf Stücke, die auf den Trennstrichen 9 im vorderen Bereich, auf einer Seite der Kippachse 300 liegen, kippt die Grundplatte 12 bis sie an der anderen Seite der Kippachse 300 mit einer Außenseite an die Trennstriche 9 stößt. Danach wird der Stempel weiter in axialer Richtung nach unten verfahren und ein Verkippen der Grundplatte 12 erzeugt, so dass ein zusätzlicher Schneideffekt entsteht. Der Stempel drückt somit nicht nur die Nahrungsmittelstücke durch die Trennstriche, sondern es kommt zu einem Zerschneiden der Stücke durch die Messer 13.

Unterhalb der Trennstriche 9 weist die Vorrichtung zur Größenkontrolle 6 einen Trichter 14 auf, der die durch die Trennstriche 9 fallenden Stücke einem darunterliegenden Bearbeitungsabschnitt zuführt.

Die Vorrichtung zur Größenkontrolle 6 ist sensorüberwacht. Eine erste Sensoreinheit 15 dient dazu, einen Bereich oberhalb der Trennstriche 9 zu kontrollieren. Der Stempel 11 wird nur dann für einen Press-/Schneidvorgang verfahren, wenn die erste Sensoreinheit 15 auf den Trennstrichen 9 liegende Stücke an Nahrungsmittelmassen detektiert.

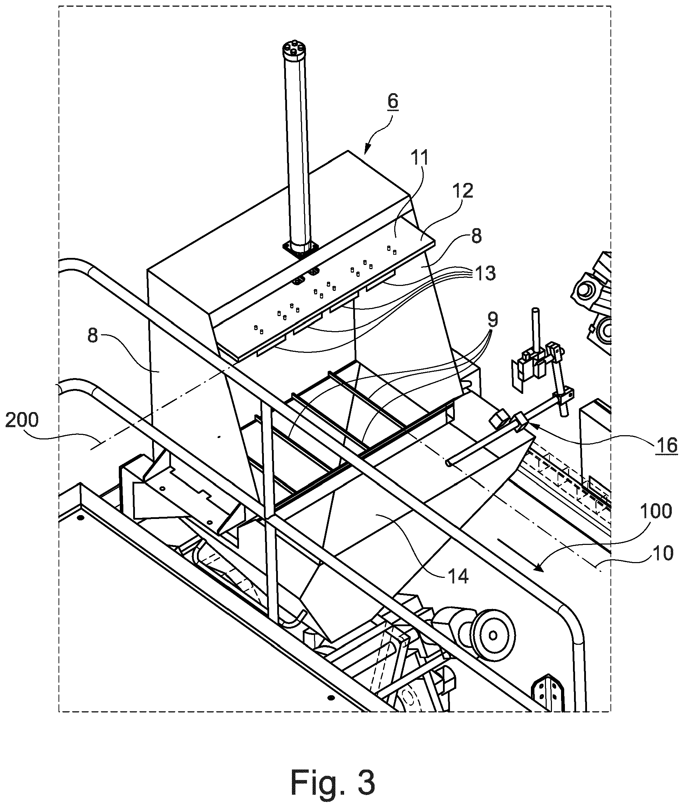

Eine zweite Sensoreinheit 16 überwacht den vom Trichter 14 eingeschlossenen Trichterraum. In den Figuren 3 und 5 ist die zweite Sensoreinheit dargestellt. Kommt es zu einem Verstopfen bzw. Blockieren des Trichters 14 durch zu große Stücke, wird dies von der zweiten Sensoreinheit 16 detektiert und die Austragsvorrichtung und vorzugsweise auch die darunterliegende und von dem Trichter beschickte Bearbeitungsvorrichtung.

Mittels der Vorrichtung zur Größenkontrolle 6 kann verhindert werden, dass zu große Nahrungsmittelmassen-Klumpen ausgetragen werden, die die Bearbeitungsvorrichtung verstopfen würden. Es ist ein kontinuierlicher Eintrag der in dem Bottich 3 befindlichen Charge in die Bearbeitungsvorrichtung möglich.

## Patentansprüche

1. Verarbeitungsanlange für eine kompakte Nahrungsmittelmasse aufweisend eine Vorrichtung zur Größenkontrolle (6) von aus einem Knetbottich (3) stückweise ausgetragenen zusammenhängenden Nahrungsmittelmassen, **dadurch gekennzeichnet, dass** die Vorrichtung zur Größenkontrolle (6)
- einen raumfesten Teil aufweist, der parallel zueinander ausgerichtete messerscharfe Trennstriche (9) aufweist, die sich mit ihren Längsachsen (10) in eine erste Richtung (100) erstrecken und
- einen zwischen einer oberen und einer unteren Position verfahrbaren Stempel (11), der auf die Trennstriche (9) zustellbar ist und eine Grundplatte (12) aufweist, die dazu ausgebildet ist, auf den Trennstrichen (9) liegende Stücke von Nahrungsmittelmassen gegen die Trennstriche (9) zu drücken und zu zerkleinern.

2. Verarbeitungsanlange nach Anspruch 1, **dadurch gekennzeichnet, dass** an der Unterseite der Grundplatte (12) Messer (13) befestigt sind, die sich mit ihren Längsachsen entlang einer zweiten Richtung erstrecken, die einen Winkel zwischen 80° und 110° zur ersten Richtung (100) einnimmt.

3. Verarbeitungsanlange nach Anspruch 1 oder 2, **dadurch gekennzeichnet, dass** die Messer des verfahrbaren Stempels (13) hintereinander und zueinander beabstandet, auf einer gemeinsamen Achse (200) liegend angeordnet sind.

4. Verarbeitungsanlange nach einem der vorhergehenden Ansprüche, **dadurch gekennzeichnet, dass** der raumfeste Teil der Vorrichtung zur Größenkontrolle eine schiefe Ebene (7) aufweist, die an die Trennstriche (9) angrenzt und eine Zufuhr der stückweise zusammenhängenden Nahrungsmittelmassen entlang der ersten Richtung (100) auf die Trennstriche (9) ausbildet.

5. Verarbeitungsanlange nach einem der vorhergehenden Ansprüche, **dadurch gekennzeichnet, dass** der verfahrbare Stempel (11) vertikal auf die horizontal ausgerichteten Trennstriche (9) zustellbar ist, um auf den Trennstrichen (9) liegende Stücke an zusammenhängender Nahrungsmittelmasse zu zerkleinern und die Messer des Stempels (13) derart angeordnet sind, dass in der untersten Position des Stempels (11) jeweils ein Messer (13) zwischen zwei beabstandete Trennstriche (9) ragt.

6. Verarbeitungsanlange nach einem der vorhergehenden Ansprüche, **dadurch gekennzeichnet, dass** die Grundplatte des verfahrbaren Stempels (12) verkippbar an einer Zylinderstange gehalten ist, wobei die Kippachse (300) senkrecht zur ersten Richtung (100) orientiert ist.

7. Verarbeitungsanlange nach einem der vorhergehenden Ansprüche, **dadurch gekennzeichnet, dass** der kürzeste Abstand zwischen den Trennstrichen (9) die für die Verarbeitung maximal zulässige Größe der portionsweise zusammenhängenden Nahrungsmittelmassen definiert.

8. Verarbeitungsanlange nach einem der vorhergehenden Ansprüche, **dadurch gekennzeichnet, dass** die Vorrichtung zur Größenkontrolle (6) eine Sensoreinheit (15) umfasst, die zur Detektion von auf den Trennstrichen (9) liegenden Stücken ausgebildet ist.

9. Verarbeitungsanlange nach einem der vorhergehenden Ansprüche, **dadurch gekennzeichnet, dass** die Vorrichtung zur Größenkontrolle (6) in vertikaler Richtung unterhalb der Trennstriche (9) einen Trichter (14) zur Zuführung der stückweise zusammenhängenden Nahrungsmittelmasse in einen Bearbeitungsabschnitt umfasst, wobei die Vorrichtung zur Größenkontrolle (6) wenigstens eine Sensoreinheit (16) aufweist, die zur Detektion von den Trichter (14) blockierenden Stücken ausgebildet ist.

10. Verarbeitungsanlange nach einem der vorhergehenden Ansprüche, **dadurch gekennzeichnet, dass** die Verarbeitungsanlange eine Austragsvorrichtung (1) zum automatisierten, portionsweisen Austrag einer kompakten Nahrungsmittelmasse aus einem in einem Hebekipper (2) angeordneten Knetbottich (3) umfasst, die wenigstens zwei Schneidwerkzeuge (13) aufweist, die jeweils wenigstens zwei Schneidkanten (20) aufweisen, um die kompakte Nahrungsmittelmasse zu durchtrennen oder zu zerschneiden und die der Vorrichtung zur Größenkontrolle (6) vorgeschaltet ist.

11. Verfahren zum Austragen einer kompakten Nahrungsmittelmasse aus einem in einem Hebekipper (2) angeordneten Knetbottich (3) mit folgenden Verfahrensschritten:
- Verkippen des Knetbottichs (3) um eine Kippachse,
- Einbringen wenigstens zweier Schneidwerkzeuge (4) einer an dem Hebekipper (2) angeordneten Austragsvorrichtung (1) in den Knetbottich (3),
- Bewegen der Schneidwerkzeuge (4) relativ zu einer im Knetbottich (3) befindlichen Nahrungsmittelmasse, derart, dass die Schneidwerkzeuge (4) die Nahrungsmittelmasse in kleinere Stücke schneiden,
- Vergrößerung des Kippwinkels des Knetbottichs (3), derart, dass die kleinen Stücke aus dem Knetbottich (3) ausgetragen werden und die noch vorhandenen großen Stücke zurückgehalten werden, **dadurch gekennzeichnet, dass** die ausgetragenen Stücke auf oder durch zueinander beanstandete und parallel angeordnete Trennstriche (9) einer Vorrichtung zur Größenkontrolle (6) fallen, und folgende Verfahrensschritte vorgesehen sind:
- Detektieren mit Hilfe einer Sensoreinheit (15), dass Stücke auf den Trennstrichen (9) liegen,
- Bewegen eines Stempels der Vorrichtung zur Größenkontrolle (11) von oben auf die Trennstriche (9) zu, derart, dass die Stücke mittels einer Grundplatte des Stempels (12) gegen die Trennstriche (9) gedrückt und zerkleinert werden.

12. Verfahren nach Anspruch 11, **dadurch gekennzeichnet, dass** der Stempel (11) an einer Unterseite der Grundplatte Messer (13) trägt, die beim Bewegen des Stempels (11) auf die Trennstriche (9) zu, zwischen die Trennstriche (9) greifen und darauf liegende Stücke zerkleinern.

13. Verfahren nach Anspruch 11 oder 12, **dadurch gekennzeichnet, dass** die Vorrichtung zur Größenkontrolle (6) unterhalb der Trennstriche (9) einen Trichter (14) umfasst, der die Stücke einem Bearbeitungsabschnitt zuführt und folgender Verfahrensschritt vorgesehen ist:
- Detektieren mit Hilfe einer Sensoreinheit (16), dass der Trichter (14) mit Stücken verstopft ist und Stoppen des Austrags der kompakten Nahrungsmittelmasse aus dem im Hebekipper (2) angeordneten Knetbottich (3).

14. Verfahren nach einem der vorhergehenden Ansprüche 8 bis 10, **dadurch gekennzeichnet, dass** die Grundplatte des verfahrbaren Stempels (12) verkippbar an einer Zylinderstange des Stempels (12) gehalten ist, wobei die Kippachse (300) senkrecht zur Verfahrrichtung des Stempels orientiert ist.
